# EUROPÄISCHE PATENTSCHRIFT

(11) **EP 1 565 298 B1**
(45) Veröffentlichungstag und Bekanntmachung des Hinweises auf die Patenterteilung: **04.03.2009**
(21) Anmeldenummer: 03770892.2
(22) Anmeldetag: 02.10.2003
(51) Int. Cl.: B29C 45/16, F16K 1/226

(54) **VERFAHREN ZUR HERSTELLUNG EINER DROSSELKLAPPE UND DROSSELKLAPPENSTUTZEN MIT EINER DROSSELKLAPPE**
METHOD FOR PRODUCING A THROTTLE VALVE AND THROTTLE VALVE SUPPORT WITH A THROTTLE VALVE
PROCEDE DE PRODUCTION D'UN CLAPET D'ETRANGLEMENT ET SUPPORT AVEC UN CLAPET D'ETRANGLEMENT

(30) Priorität: 27.11.2002 DE 10255339
(43) Veröffentlichungstag der Anmeldung: 24.08.2005
(73) Patentinhaber: Continental Automotive GmbH, 30165 Hannover (DE)
(72) Erfinder: SEEGER, Armin, 61479 Glashütten (DE)
(86) Internationale Anmeldenummer: PCT/DE2003/003290
(87) Internationale Veröffentlichungsnummer: WO 2004/048066

(56) Entgegenhaltungen:
- EP-A- 1 028 238
- WO-A-00/23701
- DE-A- 4 329 526
- GB-A- 2 093 955
- US-A1- 2001 014 582
- PATENT ABSTRACTS OF JAPAN vol. 015, no. 105 (M-1092), 13. März 1991 (1991-03-13) -& JP 03 002015 A (DAIKYO INC), 8. Januar 1991 (1991-01-08)
- ALTMANN O: "DROSSELKLAPPEN IN SERIE KUNSTSTOFF-DROSSELKLAPPEN IM ANSAUGMODUL SIND MOGLICH" , KUNSTSTOFFE, CARL HANSER VERLAG. MUNCHEN, DE, VOL. 85, NR. 3, PAGE(S) 308-310 XP000488308 ISSN: 0023-5563 Seite 308, Spalte 2 -Seite 310, Spalte 1

## Beschreibung

Die Erfindung bezieht sich auf ein Verfahren zur Herstellung einer Drosselklappe sowie auf einen Drosselklappenstutzen aus Kunststoff.

Drosselklappen in Drosselklappenstutzen sind bekannt. In der DE 195 12 729 A1 wird ein Drosselklappenstutzen mit einem rohrartigen Gehäuse beschrieben, in dem eine Drosselklappe auf einer Drosselklappenwelle befestigt ist, die quer zur Längsachse des rohrartigen Gehäuses an ihren freien Enden durch Ausnehmungen in der Gehäusewand durchführend drehbar gelagert ist. Bei der Anordnung der Drosselklappen in Drosselklappenstutzen ist oftmals nachteilig, dass aufgrund von teilweise extrem kleinen Leckage-Vorgaben mit hoher Präzision und Oberflächengüte gearbeitet werden muss, um eine Bildung von Leckluft zu vermeiden. Die Drosselklappe wird dabei in der Regel aus einem Blech gestanzt und mit großem Präzisionsaufwand feinst gedreht, wobei sehr geringe Toleranzen eingehalten werden müssen. Dabei muss darauf geachtet werden, dass die Drosselklappe möglichst dicht an der Innenwand des Drosselklappenstutzens anliegt, die Innenwand aber nicht zu fest berührt, da es sonst zu einem Verklemmen der Drosselklappe kommen kann. Zur Vereinfachung des Herstellungsverfahrens der Drosselklappe ist man inzwischen dazu übergegangen, die Drosselklappe aus Kunststoff zu fertigen. Aufgrund des Schrumpfverhaltens der dabei eingesetzten Kunststoffe ist es jedoch besonders schwierig, die erforderlichen Toleranzen einzuhalten. Eine Nachbearbeitung der aus Kunststoff gefertigten Drosselklappe ist daher in der Regel zwingend notwendig.

Ein zweistufiges Verfahren zur Drosselklappenherstellung ist aus der WO 00/23701 und der GB 2 093 955 A bekannt, wobei in letztgenannter ein Verfahren beschrieben ist, bei dem in einem ersten Schritt ein kreisrunder, scheibenförmiger Vorspritzling aus einem ersten Kunststoff durch Spritzgießen hergestellt wird, und anschließend nach Aushärtung des Vorspritzlings in einem zweiten Schritt ein Ring aus einem zweiten Kunststoff um die Schmalseite des Vorspritzlings durch Spritzgießen an dem Vorspritzling angeordnet wird und ebenfalls zur Aushärtung gebracht wird. Die erstgenannte Schrift führt als Vorzug einer zweistufigen Herstellung der Drosselklappe auch bereits die verminderte Schrumpfung im Bereich des Drosselklappenspaltes an.

In beiden Dokumenten ist jedoch am Rand der Drosselklappe ein flexibles Material als Dichtungsrand beziehungsweise Dichtlippe vorgesehen.

Die Anbringung eines separat hergestellten Dichtelements an Drosselklappenflügeln ist aus der EP 1 028 238 A2 bekannt, während die DE 43 29 526 A1 das Anspritzen von Dichtmaterial an einem Drosselklappenflügel in bestimmten Zonen beschreibt. Schließlich sind aus Altmann O. "Drosselklappen in Serie, Kunststoff-Drosselklappen im Ausgangskanal sind möglich", Kunststoffe, Carl Hanser Verlag München, Werkstoffe für in einem einzigen Schritt aus Kunststoff hergestellte Drosselklappen bekannt, wobei eine Klappe mit einer Breite von 3 mm offenbart ist.

Der Erfindung liegt daher die Aufgabe zugrunde, ein Verfahren zur Herstellung einer Drosselklappe zu schaffen, bei welchem die geforderten Toleranzen für die Drosselklappe eingehalten werden.

Die der Erfindung zugrunde liegende Aufgabe wird durch ein Verfahren zur Herstellung einer Drosselklappe mit den Merkmalen des Anspruches 1 und durch einen Drosselklappenstutzen mit einer Drosselklappe nach Anspruch 4 gelöst. Als erster und als zweiter Kunststoff können dabei Kunststoffe eingesetzt werden, die durch Spritzgießen verarbeitet werden können und die eine Temperaturbeständigkeit bis zu 150° C aufweisen. Bei dem eigentlichen Spritzgießen werden Mehrkomponentenwerkzeuge eingesetzt. Es hat sich in überraschender Weise gezeigt, dass das Problem des relativ starken Schrumpfens von Kunststoff durch das im Anspruch 1 ausgeführte zweistufige Spritzgießverfahren vermieden werden kann. Dies wird dadurch erreicht, dass der größte Teil der Schrumpfung am Vorspritzling erfolgt, der im ersten Schritt des Verfahrens hergestellt wird. Die Schrumpfung des anschließend im zweiten Schritt anzuordnenden Ringes ist deutlich geringer, so dass die erforderlichen Toleranzen auf relativ einfache Weise eingestellt werden können, wobei eine Nachbearbeitung der fertigen Drosselklappe nicht erforderlich ist. Das Verfahren ist darüber hinaus relativ einfach und kostengünstig durchzuführen.

Eine wesentliche Eigenschaft des erfindungsgemäßen Verfahrens besteht darin, dass als erster Kunststoff ein mit Füllstoffen versetztes Polyphenylensulfid oder ein mit Füllstoffen versetztes Polyphtalamid oder ein mit Glasfasern versetztes Polybuthylenterephthalat oder ein mit Glasfasern versetztes Polyetherketon oder ein mit Glasfasern versetztes Polyamid und als zweiter Kunststoff der erste Kunststoff eingesetzt werden. Bei den Füllstoffen handelt es sich in der Regel um eine Mischung aus Glasfasern und Mineralstoffen. Ihr Anteil liegt dabei in der Regel über 60 Gew.-%. Dabei ist vorteilhaft, dass die Drosselklappe eine relativ hohe Härte aufweist und gleichzeitig am Rand etwas weicher ist, was der Einhaltung der erforderlichen engen Toleranzen zugute kommt. Der Anteil an Glasfasern kann beispielsweise bei 30 oder 50 Gew.-% liegen. Der Einsatz jeweils gleicher Kunststoffe im ersten Schritt sowie im zweiten Schritt des Verfahrens vereinfacht die Durchführung des Verfahrens, wobei eine Vermeidung von Leckluft in ausreichendem Maße sichergestellt ist. Nach einem weiteren Merkmal wird im zweiten Schritt ein Ring mit einer Breite von 1 bis 3,5 mm angeordnet. Eine bevorzugte Breite des Rings beträgt dabei 3 mm. Bei dieser Ringbreite ist nur eine relativ geringe Schrumpfung des Kunststoffes in der Abkühlphase zu verzeichnen, was die Einhaltung der niedrigen Toleranzen in besonderem Maße vereinfacht.

Nach einer weiteren Ausgestaltung der Erfindung wird als erster und als zweiter Kunststoff ein mit Füllstoffen versetztes Polyphenylensulfid mit einem Anteil an Füllstoffen von 64 bis 66 Gew.-% eingesetzt. Dadurch lässt sich die Bildung von Leckluft nahezu vollständig vermeiden. Gleichzeitig ist eine relativ hohe Härte der Drosselklappe sichergestellt.

Gemäß einer weiteren bevorzugten Ausgestaltung der Erfindung ist vorgesehen, dass im ersten Schritt an der Schmalseite des Vorspritzlings ein umlaufender Vorsprung angeordnet wird. Dieser umlaufende Vorsprung verläuft in der Regel mittig. Die Bildung des Vorsprungs im ersten Schritt erleichtert die Bindung zwischen dem Vorspritzling und dem Ring, der im zweiten Schritt um die Schmalseite des Vorspritzlings durch Spritzgießen angeordnet wird.

In neuester Zeit geht man dazu über, den Drosselklappenstutzen nicht mehr aus Gussmaterial, sondern aus Kunststoff zu fertigen. Aufgrund der Materialaffinität eignet sich eine erfindungsgemäß hergestellte Drosselklappe besonders für die Anordnung in einem Drosselklappenstutzen aus Kunststoff.

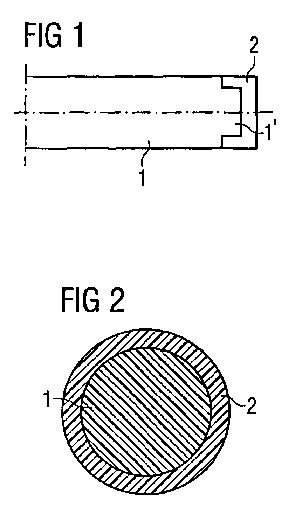

Die Erfindung wird nachfolgend anhand der Zeichnung (Fig. 1, Fig. 2) näher und beispielhaft erläutert.
- Fig. 1: zeigt eine nach dem Verfahren hergestellte Drosselklappe hälftig im Querschnitt.
- Fig. 2: zeigt eine nach dem Verfahren hergestellte Drosselklappe in der Draufsicht.

In Fig. 1 ist eine nach dem Verfahren hergestellte Drosselklappe hälftig im Querschnitt in vereinfachter, schematischer Form dargestellt. Bei dem Verfahren zur Herstellung einer Drosselklappe wird in einem ersten Schritt ein kreisrunder scheibenförmiger Vorspritzling 1 aus einem ersten Kunststoff durch Spritzgießen hergestellt. Nach Aushärtung des Vorspritzlings 1 wird anschließend in einem zweiten Schritt ein Ring 2 aus einem zweiten Kunststoff um die Schmalseite des Vorspritzlings 1 durch Spritzgießen an dem Vorspritzling 1 angeordnet und ebenfalls zur Aushärtung gebracht. Die Breite des Ringes 2 liegt im Bereich von 1 bis 3,5 mm. Dabei ist vorteilhaft, wenn im ersten Schritt an der Schmalseite des Vorspritzlings 1 ein umlaufender Vorsprung 1' angeordnet wird. Durch diese Maßnahme wird die Bindung zwischen dem Vorspritzling 1 und dem Ring 2 verstärkt.

In Fig. 2 ist die Draufsicht auf eine Drosselklappe mit dem Vorspritzling 1 und dem angeordneten Ring 2 vereinfacht dargestellt. Eine solche Drosselklappe eignet sich besonders für den Einsatz in einem Drosselklappenstutzen aus Kunststoff.

## Patentansprüche

1. Verfahren zur Herstellung einer Drosselklappe, bei dem in einem ersten Schritt ein kreisrunder, scheibenförmiger Vorspritzling (1) aus einem ersten Kunststoff durch Spritzgießen hergestellt wird, und anschließend nach Aushärtung des Vorspritzlings (1) in einem zweiten Schritt ein Ring (2) aus einem zweiten Kunststoff um die Schmalseite des Vorspritzlings (1) durch Spritzgießen an dem Vorspritzling (1) angeordnet wird und ebenfalls zur Aushärtung gebracht wird, **dadurch gekennzeichnet, dass** im zweiten Schritt der Ring (2) mit einer Breite von 1 bis 3,5 mm angeordnet wird und als erster Kunststoff ein mit Füllstoffen versetztes Polyphenylensulfid oder ein mit Füllstoffen versetztes Polyphtalamid oder ein mit Glasfasern versetztes Polybuthylenterephthalat oder ein mit Glasfasern versetztes Polyetherketon oder ein mit Glasfasern versetztes Polyamid und als zweiter Kunststoff der jeweils erste Kunststoff eingesetzt wird.

2. Verfahren nach Anspruch 1, bei dem als erster und als zweiter Kunststoff ein mit Füllstoffen versetztes Polyphenylensulfid mit einem Anteil an Füllstoffen von 64 bis 66 Gew.-% eingesetzt wird.

3. Verfahren nach Anspruch 1 oder 2, bei dem im ersten Schritt an der Schmalseite des Vorspritzlings (1) ein umlaufender Vorsprung (1') angeordnet wird.

4. Drosselklappenstutzen aus Kunststoff mit einer Drosselklappe, die aus einem Vorspritzling (1) aus einem ersten spritzgegossenen Kunststoff und einem Ring (2) aus einem zweiten spritzgegossenen Kunststoff besteht, wobei der Ring (2) um die Schmalseite des Vorspritzlings (1) angeordnet ist, **dadurch gekennzeichnet, dass** der Ring eine Breite von 1 bis 3,5 mm aufweist und der erste Kunststoff ein mit Füllstoffen versetztes Polyphenylensulfid oder ein mit Füllstoffen versetztes Polyphtalamid oder ein mit Glasfasern versetztes Polybuthylenterephthalat oder ein mit Glasfasern versetztes Polyetherketon oder ein mit Glasfasern versetztes Polyamid und der zweite Kunststoff der jeweils erste Kunststoff ist.

## Claims

1. Method for producing a throttle valve in which, in a first step, a circular, disk-shaped preform (1) is produced from a first plastic by injection moulding, and subsequently, after curing of the preform (1), in a second step, a ring (2) of a second plastic is arranged around the narrow side of the preform (1) by injection moulding on the preform (1) and is likewise made to cure, **characterized in that** in the second step the ring (2) with a width of 1 to 3.5 mm is arranged and a polyphenylene sulfide mixed with fillers or a polyphthalamide mixed with fillers or a polybutylene terephthalate mixed with glass fibers or a polyether ketone mixed with glass fibers or a polyamide mixed with glass fibers is used as the first plastic and the first plastic respectively is used as the second plastic.

2. Method as claimed in Claim 1, in which a polyphenylene sulfide mixed with fillers with a proportion of fillers of 64 to 66% by weight is used as the first and second plastics.

3. Method as claimed in Claim 1 or 2, in which, in the first step, a peripheral projection (1') is arranged on the narrow side of the preform (1).

4. Throttle valve body of plastic with a throttle valve, which is made from a preform (1) of a first injection moulded plastic and a ring (2) of a second injection moulded plastic, the ring (2) being arranged around the narrow side of the preform (1), **characterized in that** the ring has a width of 1 to 3.5 mm and the first plastic is a polyphenylene sulfide mixed with fillers or a polyphthalamide mixed with fillers or a polybutylene terephthalate mixed with glass fibers or a polyamide mixed with glass fibers and the second plastic is the first plastic respectively.

## Revendications

1. Procédé permettant de fabriquer un papillon de régulation des gaz, procédé au cours duquel, pendant une première étape, on fabrique, en moulage par injection, une pièce préliminaire (1) circulaire du type disque, et, ensuite, après durcissement de la pièce préliminaire (1) et pendant une deuxième étape, on place, sur la pièce préliminaire (1) et sur son côté étroit, en moulage par injection, une bague (2) composée d'une deuxième matière plastique et on la fait également durcir, **caractérisé par le fait que**, au cours de la deuxième étape, la bague (2) est mise en place avec une largeur de 1 à 3,5 mm et qu'on met en oeuvre, en tant que première matière plastique, un polysulfure de phénylène chargé de matières de remplissage ou un polyphtalamide chargé de matières de remplissage ou un polybutènetéréphtalate chargé de fibres de verre ou un polyéthercétone chargé de fibres de verre ou un polyamide chargé de fibres de verre et, en tant que deuxième matière plastique, la première matière plastique respective.

2. Procédé selon la revendication 1, au cours duquel, en tant que première matière plastique et en tant que deuxième matière plastique, on met en oeuvre un polysulfure de phénylène chargé de matières de remplissage avec un pourcentage en poids de matières de remplissage de 64 à 66 %.

3. Procédé selon la revendication 1 ou 2, au cours duquel, pendant la première étape, une avancée périphérique (1') est disposée sur le côté étroit de la pièce préliminaire (1).

4. Tubulure en matière plastique pour papillon de régulation des gaz, comportant un papillon de régulation des gaz composé d'une pièce préliminaire (1) produite en moulage par injection à partir d'une première matière plastique moulée par injection et d'une bague (2) produite à partir d'une deuxième matière plastique moulée par injection, où la bague (2) est placée autour du côté étroit de la pièce préliminaire (1), **caractérisée par le fait que** la bague a une largeur de 1 à 3,5 mm et que la première matière plastique est un polysulfure de phénylène chargé de matières de remplissage ou un polyphtalamide chargé de matières de remplissage ou un polybutènetéréphtalate chargé de fibres de verre ou un polyéthercétone chargé de fibres de verre ou un polyamide chargé de fibres de verre et que la deuxième matière plastique est, dans chaque cas, la première matière plastique respective.
